**Europäisches Patentamt**

**European Patent Office**

**Office européen des brevets**

(11) Veröffentlichungsnummer: **0 312 769**
**A1**

(12) **EUROPÄISCHE PATENTANMELDUNG**

(21) Anmeldenummer: 88115071.8

(51) Int. Cl.⁴: **B01F 5/20 , B05B 7/08**

(22) Anmeldetag: 15.09.88

(30) Priorität: 22.10.87 DE 3735676

(43) Veröffentlichungstag der Anmeldung:
26.04.89 Patentblatt 89/17

(84) Benannte Vertragsstaaten:
DE FR GB

(71) Anmelder: **Drägerwerk Aktiengesellschaft**
**Moislinger Allee 53-55**
**D-2400 Lübeck 1(DE)**

(72) Erfinder: **Manneck, Hartmut**
**Tannenredder 39**
**D-2401 Gross Grönau(DE)**

(54) Verfahren zum Mischen von fluiden Substanzen und Vorrichtung hierzu.

(57) Ein Verfahren zum Mischen von fluiden Substanzen in einem vorgegebenen Mischungsverhältnis, wobei die Komponenten unter Druckeinwirkung aus Vorratsräumen in vorgegebenen Anteilen ausgepreßt werden, soll hinsichtlich der einfachen Durchführung einer definierten Mischung und der unmittelbaren Anwendungsmöglichkeit des Mischproduktes verbessert werden. Dies wird gemäß der Erfindung dadurch erreicht, daß aus zerstäubungsfähigen Komponenten eine linear gerichtete Strömung der einen zerstäubten Komponenten in einem im Umgebungsraum gebildeten freien Mischraum (12) von der linear gerichteten Strömung mindestens einer weiteren zerstäubten Komponente durchsetzt und dadurch die Mischung gebildet wird. Eine vorteilhafte Vorrichtung zur Durchführung des Verfahrens besteht in einer Mehrfachzerstäuberdüse (1) in Verbindung mit drucklosen oder treibgasgefüllten Komponentenkammern (2, 3).

Fig.1

### Verfahren zum Mischen von fluiden Substanzen und Vorrichtung hierzu

Die Erfindung betrifft ein Verfahren zum Mischen von fluiden Substanzen in einem vorgegebenen Mischungsverhältnis, wobei die Komponenten unter Druckeinwirkung aus Vorratsräumen in vorgegebenen Anteilen ausgepresst werden. Außerdem sind zweckmäßige Vorrichtungen zur Durchführung des Verfahrens angegeben.

Zur Mischung von fluiden Substanzen wie Flüssigkeiten, Gasen oder flüssigen Suspensionen sind u.a. durch die DE- 31 43 718 A1 Wirbelmischvorrichtungen bekannt, bei denen verschiedene Komponenten in einen Mischbehälter eingesprüht und dort durch eine entsprechend angefachte Wirbelströmung miteinander vermischt werden. Eine solche Wirbelmischvorrichtung erscheint aufwendig und bietet bei verschiedenen Anwendungsfällen Schwierigkeiten hinsichtlich der Weiterleitung und gegebenenfalls Verarbeitung des Mischprodukts.

Aus der DE-Gbm 83 21 847 ist ein doppelzylindrisches Dosiergerät zum Dosieren von viskosen Materialien bekannt, wobei die Komponenten unter Druckeinwirkung aus Vorratsräumen in vorgegebenen Anteilen ausgepresst werden. Es handelt sich dabei um Komponenten zahnärztlicher Abformmassen, und die Mischung muß auf einer Unterlage durch zusätzliches mechanisches Verrühren erfolgen.

Die Erfindung geht von der Aufgabenstellung aus, ein mit einfachen technischen Mitteln realisierbares Mischverfahren für fluide Substanzen anzugeben, wobei das Mischprodukt unmittelbar im freien Umgebungsraum zur Weiterverwendung zur Verfügung steht.

Das Kennzeichnende der Erfindung ist darin zu sehen, daß aus zerstäubungsfähigen, vorzugsweise flüssigen Komponenten eine gerichtete Strömung der einen zerstäubten Komponente in einem im Umgebungsraum gebildeten freien Mischraum von der gerichteten Strömung mindestens einer weiteren zerstäubten Komponente durchsetzt und dadurch die Mischung gebildet wird. Ein solches Verfahren läßt sich äußerst einfach durchführen und die Mischung steht unmittelbar zur Weiterverarbeitung, beispielsweise bei Klebstoffen, zur Verfügung. Damit entfallen spezielle Mischräume, in denen sich das Mischprodukt bzw. seine Komponenten ablagern und die gegebenenfalls gereinigt werden müssen. Durch die in vorgegebenen Anteilen zugeführten Komponenten wird die Einhaltung des gewünschten Mischungsverhältnisses sichergestellt. Die Einhaltung dieser vorgegebenen Anteile kann beispielsweise durch den Austrittsquerschnitt, den Förderdruck und/oder die Fördermenge der Komponenten festgelegt werden.

Das Verfahren eignet sich ganz allgemein zur Herstellung einer Mischung aus verschiedenartigen fluiden Substanzen, vorzugsweise von als Flüssigkeiten vorliegenden Substanzen, wobei bei hochviskosen Flüssigkeiten wie Komponentenklebern, zweckmäßig zuvor ein verdunstendes Lösungsmittel zugesetzt wird, welches die Komponente zerstäubungsfähig macht.

Eine zweckmäßige Anwendung des Verfahrens kann in der Weise erfolgen, daß als Mischung ein in Luft sichtbares Aerosol entsteht. Hierzu lassen sich beispielsweise geeignete aerosolbildende Komponenten, wie Ammoniumverbindungen und Salzsäure bzw. Essigsäure oder leicht flüchtige Amine und leicht flüchtige Chloride verwenden.

Eine vorteilhafte Vorrichtung zur Durchführung des Verfahrens, bei der die Komponenten unter Druckeinwirkung aus Komponentenvorratskammern in vorgegebenen Anteilen ausgepresst werden, kann in der Weise ausgebildet sein, daß ein Sprühkopf mit mindestens zwei Auslaßdüsen in Verbindung mit Komponentenzuführungsleitungen vorgesehen ist, und daß die Sprührichtungen der Auslaßdüsen so gegeneinander geneigt sind, daß eine Mischung entsteht. Ein derartiger einfach aufgebauter Mehrfachzerstäuber ermöglicht die definierte Dosierung und Mischung der Komponenten, wobei die Komponenten gerade dort hingesprüht werden können, wo die Mischung benötigt wird. Dadurch wird die Gesamtmenge besser dosiert; die etwa zwischen den Komponenten eintretende chemische und/oder physikalische Reaktion erfolgt im freien Umgebungsraum und es wird kein zusätzliches Mischgefäß benötigt. Die Mischung entsteht gebrauchsfertig am gewünschten Anwendungsort.

In einer vorteilhaften Ausbildung kann der Sprühkopf mit drucklosen Komponentenkammern verbunden sein und in den Komponentenzuführungsleitungen sind Pumpvorrichtungen angeordnet, welche durch Bewegung des Sprühkopfes eine Förderbewegung bzw. einen Überdruck in den Komponentenkammern erzeugen.

Eine andere gegebenenfalls zweckmäßige Ausbildung läßt sich dadurch erreichen, daß der Sprühkopf über die Komponentenzuführungsleitungen mit treibgasgefüllten unter Überdruck stehenden Komponentenkammern verbunden ist.

Bei der Verwendung der Vorrichtung zur Herstellung einer sichtbaren Aerosolmischung kann es zweckmäßig sein, mindestens zwei in ein gemeinsames Luftzuführungsstück einsetzbare, beidseitig durch Druckventile abgeschlossene Komponentenröhrchen anzuordnen, wobei das gemeinsame Luftzuführungsstück mit einer Pumpvorrichtung, zweckmäßig in Form eines Gebläseballs, in Verbindung steht. Dabei kann eine vorteilhafte Weiterbildung vorsehen, daß die Komponentenröhrchen im Bereich ihrer Auslaßöffnungen in eine Haltevorrichtung einsetzbar sind, welche die Auslaßdüsen enthält.

Durch die Anwendung der Merkmale der Erfindung wird durch gezielte Mehrfachzerstäubung eine Mischung hergestellt, die unmittelbar zur Verwendung zur Verfügung steht.

Die Erfindung soll nachfolgend unter Bezug auf Ausführungsbeispiele näher erläutert werden; es zeigen:

Fig. 1 einen Schnitt durch einen Mehrfachzerstäuber mit getrennten Komponentenkammern,

Fig. 2 eine schematische Darstellung eines Mehrfachzerstäubers für die Bildung von in Luft sichtbaren Aerosolen.

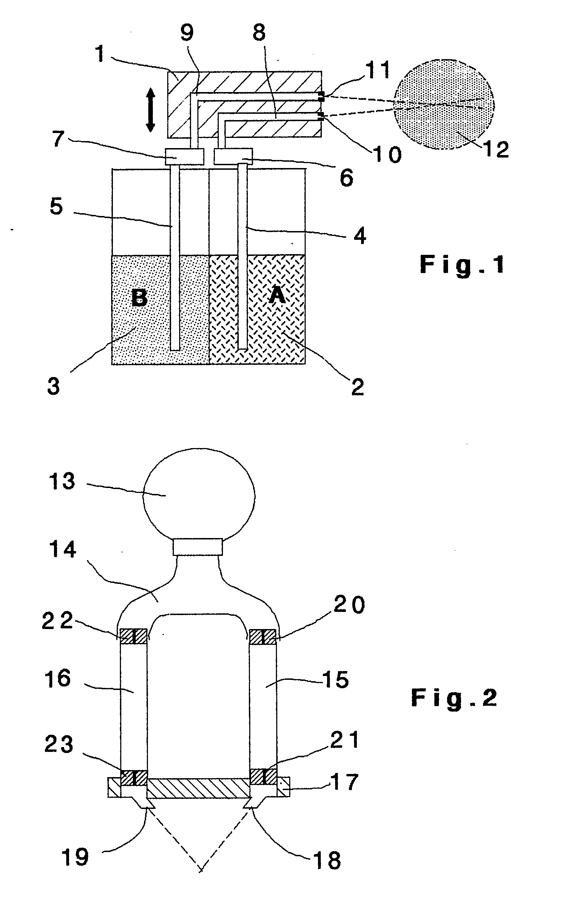

In Fig. 1 ist ein druckloser Mehrfachzerstäuber dargestellt, der einen Sprühkopf 1 enthält. In die beiden getrennten Komponentenkammern 2,3 ragen Komponentenzuführungsleitungen 4,5, welche durch Pumpvorrichtungen 6,7 mit inneren Verbindungsleitungen 8,9 des Sprühkopfes 1 in Verbindung stehen. Bei einer Abwärtsbewegung des Sprühkopfes 1 wird jeweils eine dosierte Menge beider Komponenten A,B aus den Komponentenkammern 2,3 gefördert.

An den Auslaßöffnungen der inneren Verbindungsleitungen 8,9 sind lochförmige Düsenstücke 10,11 vorgesehen, so daß die zweckmäßig linear gerichteten Sprühstrahlen in gleicher Austrittsrichtung gegeneinander geneigt verlaufen. Sie durchdringen sich im Mischungsbereich 12 im freien Umgebungsraum gegenseitig und erzeugen die Mischung als fertiges benutzbares Endprodukt.

Anstelle des in Fig. 1 beschriebenen drucklosen Mehrfachzerstäubers kann unter Weglassung der Pumpvorrichtungen 6,7 auch eine Mehrfachzerstäubereinheit unter Druck aufgebaut werden, wobei die beiden Komponentenkammern 2,3 mit den Komponenten A,B und mit einem entsprechenden Treibgas gefüllt sind.

Das Mischungsverhältnis der Einzelkomponenten wird durch den Düsenquerschnitt, den Förderdruck und/oder die Fördermenge entsprechend angepaßt gesteuert.

Die Ausführungsform nach Fig. 2 zeigt ein mit einem Gebläseball 13 verbundenes gemeinsames Luftzuführungsstück 14, in dessen freie Enden zwei Komponentenröhrchen 15,16 mit elastischer Wandabdichtung einsteckbar sind. Diese enthalten Komponenten, die in der Mischung ein sichtbares Luftaerosol bilden. Beispielsweise kann in dem Komponentenröhrchen 15 Essigsäure und in dem Komponentenröhrchen 16 Ammoniak eingeschlossen sein.

Die beiden Komponentenröhrchen 15,16 sind im Bereich ihrer Auslaßöffnungen in ein Haltestück 17 einsteckbar, welches die Auslaßdüsen 18,19 enthält.

Die Komponentenröhrchen 15,16 sind an ihren beiden Enden mit Druckventilen 20,21 und 22,23, beispielsweise in Form elastischer Lippenventile abgeschlossen. Anstelle der Druckventile 20,22 können gegebenenfalls vorteilhaft auch verschiebbare Kolben angeordnet sein, welche, von der Luftströmung angetrieben, die Komponenten auspressen.

Durch Zusammenquetschen des Gebläseballs 13 wird eine Luftströmung in beiden Komponentenröhrchen 15,16 erzeugt, deren Überdruck die Druckventile 20-23 öffnet und die beiden Komponentenströmungen aus den Auslaßdüsen 18,19 austreten läßt.

Der Begriff der linear gerichteten Sprühstrahlen bezieht sich im allgemeinen auf die Hauptaustrittsrichtung, weil der Sprühstrahl in den meisten Fällen kegelförmig divergiert, so daß eine genau definierte Austrittsrichtung nicht angegeben werden kann.

**Ansprüche**

1. Verfahren zum Mischen von fluiden Substanzen in einem vorgegebenen Mischungsverhältnis, wobei die Komponenten unter Druckeinwirkung aus Vorratsräumen in vorgegebenen Anteilen ausgepresst werden, **dadurch gekennzeichnet**, daß aus zerstäubungsfähigen Komponenten eine gerichtete Strömung der einen zerstäubten Komponente in einem im Umgebungsraum gebildeten freien Mischraum von der gerichteten Strömung mindestens einer weiteren zerstäubten Komponente durchsetzt und dadurch die Mischung gebildet wird.

2. Verfahren nach Anspruch 1, **dadurch gekennzeichnet**, daß die Komponenten Flüssigkeiten sind.

3. Verfahren nach Anspruch 1, **dadurch gekennzeichnet**, daß mindestens eine Komponente eine hochviskose Flüssigkeit ist, die mit einem verdunstenden Lösungsmittel zerstäubungsfähig gemacht wird.

4. Verfahren nach Anspruch 1, **dadurch gekennzeichnet**, daß die Komponenten so gewählt sind, daß als Mischung ein in Luft sichtbares Aerosol entsteht.

5. Vorrichtung zur Durchführung des Verfahrens, insbesondere nach Anspruch 1, bei der die Komponenten unter Druckeinwirkung aus Komponenten-Vorratskammern in vorgegebenen Anteilen ausgepresst werden, **da durch gekennzeichnet**, daß ein Sprühkopf (1) mit mindestens zwei Auslaßdüsen (10,11) in Verbindung mit Komponentenzuführungsleitungen (4,5) vorgesehen ist, und daß die Sprührichtungen der Auslaßdüsen (10,11) so gegeneinander geneigt sind, daß eine Mischung entsteht.

6. Vorrichtung nach Anspruch 5, **dadurch gekennzeichnet**, daß der Sprühkopf mit drucklosen Komponentenkammern (2,3) verbunden ist, und daß in den Komponentenzuführungsleitungen (4,5) Pumpvorrichtungen (6,7) angeordnet sind, welche durch Bewegung des Sprühkopfes (1) einen Überdruck in den Komponentenkammern (2,3) erzeugen.

7. Vorrichtung nach Anspruch 5, **dadurch gekennzeichnet**, daß der Sprühkopf (1) über die Komponentenzuführungsleitungen (4,5) mit treibgasgefüllten unter Überdruck stehenden Komponentenkammern verbunden ist.

8. Vorrichtung zur Durchführung des Verfahrens, insbesondere nach Anspruch 1, bei der die Komponenten unter Druckeinwirkung aus Komponenten-Vorratskammern in vorgegebenen Anteilen ausgepresst werden, **dadurch gekennzeichnet**, daß mindestens zwei in ein gemeinsames Luftzuführungsstück (14) einsetzbare, beidseitig durch Druckventile (20-23) abgeschlossene Komponentenröhrchen (15,16) vorgesehen sind, und daß das gemeinsame Luftzuführungsstück (14) mit einer Pumpvorrichtung (13) in Verbindung steht.

9. Vorrichtung nach Anspruch 8, **dadurch gekennzeichnet**, daß die Komponentenröhrchen (15,16) im Bereich ihrer Auslaßöffnungen in eine Haltevorrichtung (17) einsetzbar sind, welche die Auslaßdüsen (18,19) enthält.

10. Vorrichtung nach Anspruch 8, **dadurch gekennzeichnet**, daß die Pumpvorrichtung ein Gebläseball (13) ist.

Fig.1

Fig.2

Europäisches
Patentamt

**EUROPÄISCHER RECHERCHENBERICHT**

Nummer der Anmeldung

EP 88 11 5071

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 336 053 (WOLFANGEL & SCHIEMANN) <br> * Ansprüche 1 - 3 * <br> --- | 1, 2, 4, 5 | B 01 F 5/20 <br> B 05 B 7/08 |
| X | DE-A-3 523 509 (FSI CORP.) <br> * Anspruch 1; Figur 1 * <br> --- | 1, 2, 5 | |
| A | GB-A-2 086 749 (D.E. DIETRICH) <br> & DE - A - 3 143 718 (Cat. D, A) <br> --- | | |
| D,A | DE-U-8 321 847 (DETAX) <br> ----- | | |

RECHERCHIERTE SACHGEBIETE (Int. Cl.4)

B 01 F 5/00
B 05 B 7/00

Der vorliegende Recherchenbericht wurde für alle Patentansprüche erstellt

| Recherchenort | Abschlußdatum der Recherche | Prüfer |
|---|---|---|
| BERLIN | 13-01-1989 | KESTEN W.G. |